# EUROPÄISCHE PATENTSCHRIFT

(11) **EP 3 509 928 B1**
(45) Veröffentlichungstag und Bekanntmachung des Hinweises auf die Patenterteilung: **17.08.2022**
(21) Anmeldenummer: 17848216.2
(22) Anmeldetag: 11.09.2017
(51) Int. Cl.: B62B 7/08, A47D 13/04

(54) **KINDERWAGEN**
BABY CARRIAGE
POUSSETTE

(30) Priorität: 12.09.2016 DE 102016010884
(43) Veröffentlichungstag der Anmeldung: 17.07.2019
(73) Patentinhaber: Mima International Ltd., Hong Kong, Hong Kong (CN)
(72) Erfinder: KHO, David, 10110 Bangkok (TH); HURTADO JIMENEZ, Alvaro, 46007 Valencia (ES)
(74) Vertreter: Duda, Rafael Thomas
(86) Internationale Anmeldenummer: PCT/IB2017/001264
(87) Internationale Veröffentlichungsnummer: WO 2018/047007

(56) Entgegenhaltungen:
- WO-A1-2008/006256
- WO-A1-2013/051948
- CN-A- 1 322 651
- CN-U- 203 693 078
- CN-U- 203 739 942
- CN-U- 204 368 232
- CN-U- 205 010 298
- DE-U1- 8 520 890
- FR-A1- 2 486 894
- US-A1- 2010 308 550
- US-A1- 2013 257 019

## Beschreibung

Die vorliegende Erfindung betrifft einen zusammenklappbaren Kinderwagen vom Typ Buggy mit einem Rahmengestell umfassend einen Rückenrahmen, einen mit diesem gelenkig verbundenen unteren vorderen Sitzrahmen, wobei beim Zusammenklappen des Buggys der Rückenrahmen gegenüber dem unteren vorderen Sitzrahmen um eine erste gemeinsame Gelenkachse schwenkt, weiter umfassend einen mit dem unteren vorderen Sitzrahmen gelenkig verbundenen unteren Hinterrahmen, wobei beim Zusammenklappen des Buggys der untere Hinterrahmen gegenüber dem unteren vorderen Sitzrahmen um eine zweite gemeinsame Gelenkachse schwenkt, weiter umfassend mindestens eine Stützstrebe, die einerseits in einem ersten Bereich beim Zusammenklappen des Buggys um eine dritte Gelenkachse schwenkend mit dem Rückenrahmen gelenkig verbunden ist, wobei die Stützstrebe andererseits in einem zweiten Bereich, mit Abstand von dem ersten Bereich, um eine vierte Gelenkachse schwenkend mit dem unteren Hinterrahmen gelenkig verbunden ist, wobei der Sitzrahmen eine von der ersten Gelenkachse ausgehende durchgehende in der Vorderansicht des Buggys gesehen etwa U-förmige nach oben hin offene U-Strebe umfasst, wobei die U-Strebe des Sitzrahmens in der Seitenansicht des Buggys gesehen einen von der ersten Gelenkachse ausgehend zu den Vorderrädern hin nach unten hin abgewinkelten Verlauf aufweist.

Kinderwagen vom Typ Buggy zeichnen sich dadurch aus, dass das Kind darin in einer sitzenden oder halb liegenden Position gefahren wird, dass sie vergleichsweise leicht zu fahren und geländegängig sind und dass sie sich aus einer Grundstellung (Fahrstellung) in eine Transportstellung zusammenklappen lassen, in der sie platzsparend gefaltet sind und sich leicht transportieren lassen. Aus dem Stand der Technik sind verschiedenste Konstruktionen solcher Buggys mit unterschiedlichen Mechanismen für das Zusammenklappen in die Transportstellung bekannt. Manche Buggys werden so geklappt, dass der obere Teil, also der Rückenrahmen oder Schieberahmen nach hinten hin in Richtung auf die Hinterräder schwenkt. Bei anderen Modellen erfolgt das Zusammenklappen in die umgekehrte Richtung, so dass der obere Teil des Rahmens (Rückenrahmen) nach vorn in Richtung auf die Vorderräder geklappt wird.

In der WO 2010/143301 A1 ist ein Buggy beschrieben, bei dem zwar der Rückenrahmen als ein etwa U-förmiger Bügel mit einer Gelenkachse am unteren Ende ausgebildet ist, um die der Rückenrahmen beim Zusammenklappen schwenkt, bei dem jedoch das untere Rahmengestell einen zentralen Korpus aufweist, von dem in etwa pyramidaler Anordnung zwei Streben diagonal nach vorn hin abgehen, an deren Enden sich die Vorderräder befinden und nach hinten hin ebenfalls diagonal Streben abgehen zu den Hinterrädern, so dass sich beim Zusammenklappen nicht nur die Vorderräder auf die Hinterräder zu bewegen, sondern sich jeweils auch die beiden Vorderräder und die Hinterräder nach innen hin aufeinander zu bewegen. Die vier Streben des unteren Rahmengestells bewegen sich also quasi scherenartig aufeinander zu und sind dazu mit entsprechenden Lenkern versehen. Ein solcher Klappmechanismus ist konstruktiv sehr aufwändig und besteht aus vielen Verbindungselementen.

In der WO 2012/034940 A1 ist ein Buggy beschrieben, bei dem das Rahmengestell einen vergleichsweise einfachen Aufbau hat mit verhältnismäßig wenigen gelenkig miteinander verbundenen Rahmenteilen. Der Rückenrahmen besteht aus einer U-Strebe und ist mit einem unteren vorderen Rahmen gelenkig verbunden, welcher auch aus einer etwa U-förmigen Strebe besteht, die nach oben hin offen ist, wobei jedoch diese beiden Rahmenteile im Gelenkbereich miteinander fluchten und der untere vordere Rahmen geradlinig nach unten hin geneigt verläuft, so dass er im Grunde keine Sitzposition vorgibt, sondern ein entsprechendes Sitzelement dazu in den Rahmen eingehängt wird. Die Form des Rahmengestells gibt hier eine auf einer geneigten Ebene liegende Stellung des Kindes vor. Die Entarretierung der Gelenke zwecks Zusammenklappen des Buggys erfolgt bei diesem wie bei den meisten anderen Buggys dieses Typs auch über die Gelenke selbst, beispielsweise indem diese einwärts gedrückt werden.

In der DE 85 20 890 U1 wird ein zusammenklappbarer Kinderwagen mit den Merkmalen der eingangs genannten Gattung beschrieben, bei dem der vordere Rahmen kein vollständiger Sitzrahmen ist und vergleichsweise weit nach oben hin verlängert ist, wo er mit dem Rückenrahmen verbunden ist. Der Hinterrahmen, an dem sich die Hinterräder befinden, überlappt sich mit dem vorderen Rahmen und bildet den Sitzrahmen. Eine zweite Gelenkachse, die den vorderen Rahmen mit dem Hinterrahmen verbindet, ist bei diesem bekannten Kinderwagen in Sitzhöhe und somit in der Seitenansicht gesehen weit unterhalb der ersten Gelenkachse angeordnet, die den vorderen Rahmen mit dem Rückenrahmen verbindet. Durch die Bauart bedingt sind der vordere Rahmen und der Hinterrahmen vergleichsweise lang, so dass sich in der zusammengeklappten Position eine weniger kompakte Anordnung ergibt.

In der CN 205 010 298 U ist ein Buggy beschrieben, der nur ein Vorderrad aufweist und bei dem ein unterer vorderer Rahmen und ein Rückenrahmen miteinander fluchten. Der vordere Rahmen bildet hier keinen Sitzrahmen aus, sondern der Sitz ist separat in dem unteren vorderen Rahmen gehalten. Die erste Gelenkachse, die den unteren vorderen Rahmen mit dem Rückrahmen verbindet, liegt weit oberhalb des Sitzes und die zweite Gelenkachse, die den Hinterrahmen, an dem sich die Hinterräder befinden, mit dem Rückenrahmen verbindet, liegt noch weiter oberhalb am Rückenrahmen hinter der ersten Gelenkachse und endet somit nicht in Sitzhöhe.

In der CN 203 693 078 U ist ein weiterer zusammenklappbarer Kinderwagen beschrieben.

Die Aufgabe der Erfindung besteht darin, einen alternativen zusammenklappbaren Kinderwagen vom Typ Buggy der eingangs genannten Gattung zur Verfügung zu stellen, welcher im Bereich des Rahmens eine eher sitzende Position des Kindes vorgibt, bei Erhaltung eines konstruktiv einfachen Aufbaus mit nur wenigen Rahmenteilen und einfachem Mechanismus für das Zusammenklappen des Buggys in die Transportstellung.

Die Lösung dieser Aufgabe liefert ein zusammenklappbarer Kinderwagen vom Typ Buggy der eingangs genannten Gattung mit den kennzeichnenden Merkmalen des Anspruchs 1.

Gemäß der Erfindung nach Anspruch 1 ist vorgesehen, dass die zweite Gelenkachse (D) in der Grundstellung des Buggys in der Seitenansicht des Buggys gesehen oberhalb der ersten Gelenkachse (A) oder etwa auf gleicher Höhe mit dieser liegt. Durch diese Lösung erhält man eine stärker an der Sitzhaltung des Kindes ausgerichtete Form der Strebe des Sitzrahmens. Außerdem ergibt sich eine andere relative Position der Gelenkachsen zueinander, was die Kinematik der Schwenkbewegung beim Zusammenklappen des Buggys etwas verändert.

Gemäß einer bevorzugten Weiterbildung der Erfindung weist die U-Strebe des Sitzrahmens einen stumpfwinklig bis etwa rechtwinklig abgewinkelten Verlauf auf, wodurch sich eine Anpassung an die Sitzform ergibt. Dabei bleibt der Vorteil einer durchgehenden in der Vorderansicht etwa U-förmigen Strebe für den Sitzrahmen erhalten, so dass die Konstruktion des Rahmengestells mit wenigen Bauteilen auskommt und die Herstellung und Montage eines solchen Buggys vereinfacht werden.

Vorzugsweise ist gemäß einer Weiterbildung der Erfindung vorgesehen, dass sich die Vorderräder an dem unteren vorderen Sitzrahmen befinden und sich die Hinterräder an dem unteren Hinterrahmen befinden. Eine solche Lösung ist von der Herstellung her einfacher als die Verwendung gesonderter Streben zu den Rädern, die an einem weiteren Bauteil befestigt werden müssen. Außerdem ist die erfindungsgemäße Konstruktion mechanisch belastbarer. Beispielsweise können die beiden Vorderräder beiderseits des unteren Scheitelpunkts an der U-Strebe des Sitzrahmens angebracht sein.

Vorzugsweise weist gemäß einer Weiterbildung der Erfindung die U-Strebe des Sitzrahmens in der Grundstellung (Fahrstellung) des Buggys in der Seitenansicht gesehen von der ersten Gelenkachse ausgehend einen ersten etwa horizontalen oder leicht ansteigenden Abschnitt auf, welcher sich bis zu der stumpfwinkligen oder etwa rechtwinkligen Abwinklung hin erstreckt, auf den dann, zu den Vorderrädern hin, ein nach unten hin geneigter zweiter Abschnitt folgt.

Diese Ausbildung des Sitzrahmens führt, wenn vorzugsweise die zweite Gelenkachse in dem ersten Abschnitt der U-Strebe des Sitzrahmens angeordnet ist, dazu, dass die zweite Gelenkachse dann in der Grundstellung des Buggys in der Seitenansicht des Buggys gesehen oberhalb der ersten Gelenkachse oder etwa auf gleicher Höhe mit dieser liegt. Dies führt zu anderen geometrischen Verhältnissen bei der Schwenkbewegung beim Zusammenklappen des Buggys als bei den aus dem Stand der Technik bekannten Lösungen, denn dort liegt in der Regel die erste Gelenkachse immer oberhalb der zweiten Gelenkachse.

Eine bevorzugte Weiterbildung der Erfindung sieht vor, dass der untere Hinterrahmen wenigstens zwei miteinander verbundene U-Streben umfasst, nämlich eine untere U-Strebe in Form eines nach unten üben hin offenen U, an der sich die Hinterräder befinden und eine obere etwa U-förmige Strebe in Form eines nach oben hin offenen U, wobei in der Vorderansicht gesehen untere und obere U-Strebe etwa im Bereich ihrer jeweiligen Scheitelpunkte miteinander verbunden sind. Dadurch ergibt sich eine etwa X-förmige Grundform für den Hinterrahmen, mit der Maßgabe, dass die Schenkel der beiden Streben nicht geradlinig verlaufen, sondern jeweils abgerundet in U-Form.

Gemäß einer bevorzugten Weiterbildung der erfindungsgemäßen Aufgabenlösung können die beiden oberen Endbereiche der U-Strebe des Hinterrahmens, die etwa die Form eines nach oben hin offenen U aufweist, jeweils außenseitig an dem Sitzrahmen angelenkt sein. Dies hat beispielsweise den Vorteil, dass die oberen Bereiche der Strebe des Hinterrahmens im Sitzbereich nicht stören und dort die volle Breite des Sitzbereichs zwischen den beiden Streben des U-förmigen Sitzrahmens zur Verfügung steht.

Vorzugsweise ist die U-Strebe des unteren Hinterrahmens mit ihren beiden oberen Endbereichen in dem ersten Abschnitt der U-Strebe des Sitzrahmens an dieser gelenkig angebracht. Somit befindet sich die zweite Gelenkachse relativ nahe an der ersten Gelenkachse und liegt mindestens etwa in gleicher Höhe mit dieser, was Einfluss auf die Kinematik bei der Schwenkbewegung der Rahmenteile des Buggys beim Zusammenklappen hat.

Gemäß einer Weiterbildung der Erfindung sind die beiden oberen Endbereiche der U-Strebe des Hinterrahmens in der Vorderansicht gesehen jeweils etwas nach innen und aufeinander zu umgebogen oder abgewinkelt, das heißt, unterhalb der Sitzfläche ist der Hinterrahmen etwas breiter als der Sitzrahmen.

Vorzugsweise sind weiterhin die beiden oberen Endbereiche der U-Strebe des Hinterrahmens in der Seitenansicht gesehen jeweils etwas nach hinten hin in Richtung Rückenrahmen umgebogen oder abgewinkelt. So können die zweiten Gelenke relativ nahe an den ersten Gelenken liegen, ohne dass sich jedoch die Streben des Hinterrahmens und diejenigen des Rückenrahmens bei der Schwenkbewegung behindern.

Weiterhin ist es Aufgabe, einen zusammenklappbaren Kinderwagen vom Typ Buggy mit den Merkmalen der eingangs genannten Gattung zur Verfügung zu stellen, welcher einen in der Handhabung einfachen und sicheren Mechanismus zur Entarretierung der Gelenke für das Zusammenklappen aufweist. Die Lösung dieser Aufgabe ergibt sich dadurch, dass der Mechanismus für die Entarretierung der Gelenke mindestens einen Zughebel oder Zuggriff umfasst, welcher im Bereich des Sitzrahmens angeordnet ist. Diese Art der Entarretierung zum Lösen der Gelenke vor dem Zusammenklappen erweist sich als besonders ergonomisch und bequem, im Vergleich zu bekannten Lösungen, bei denen die Entarretierung in den Gelenken selbst erfolgt.

Vorzugsweise umfasst gemäß einer Weiterbildung der Erfindung der Mechanismus für die Entarretierung der Gelenke einen ersten Zughebel oder Zuggriff, nach dessen herausziehen durch Ausüben einer Zugkraft auf einen zweiten Zughebel oder Zuggriff der Buggy zusammenklappbar ist. Diese beiden Zughebel oder Zuggriffe können so positioniert sein, dass sie nahe beieinander liegen und die Handhabung ist dann sehr einfach. Beispielsweise löst die Bedienungsperson mit der einen Hand über den ersten Zughebel die Arretierung der Gelenke und zieht dann an dem zweiten Zughebel, wodurch man auch quasi den Buggy anheben kann und sich die Bewegung des Zusammenklappens in die Transportstellung vollzieht.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 eine perspektivische Vorderansicht eines beispielhaften erfindungsgemäßen Buggys;
Figur 2 eine vereinfachte Seitenansicht des Buggys von Figur 1 im teilweisen Längsschnitt;
Figur 3 eine perspektivische Explosionsdarstellung der wesentlichen Teile eines Buggys gemäß der Erfindung;
Figur 4 eine Seitenansicht des Buggys gemäß dem Ausführungsbeispiel der Figuren 1 bis 3 in der Grundstellung;
Figur 5 eine entsprechende Seitenansicht des Buggys von Figur 4 in einer teilweise zusammengeklappten Stellung;
Figur 6 eine weitere Seitenansicht des Buggys von Figur 5 in der vollständig zusammengeklappten Transportstellung.

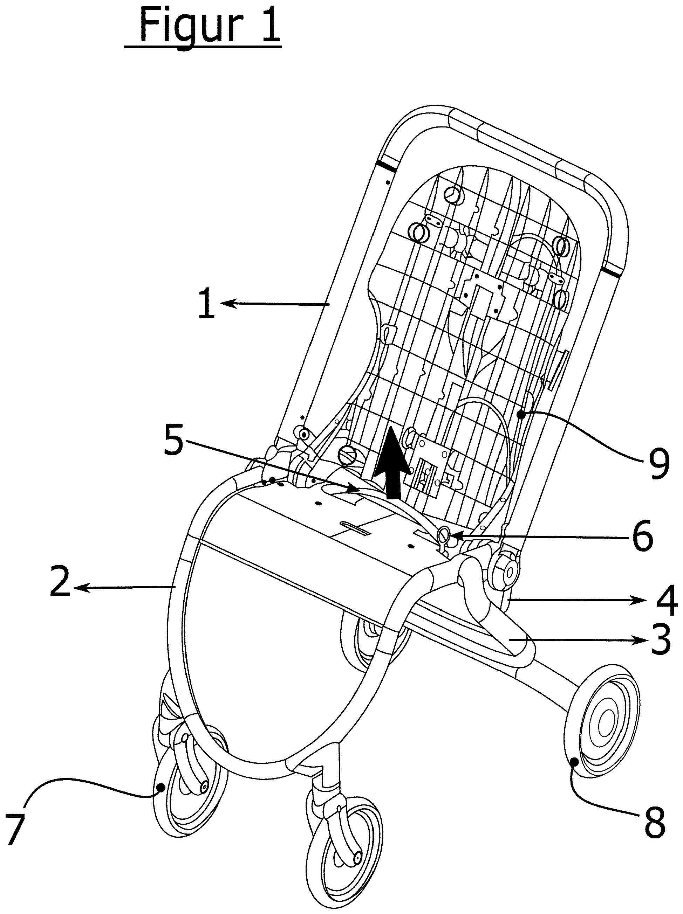

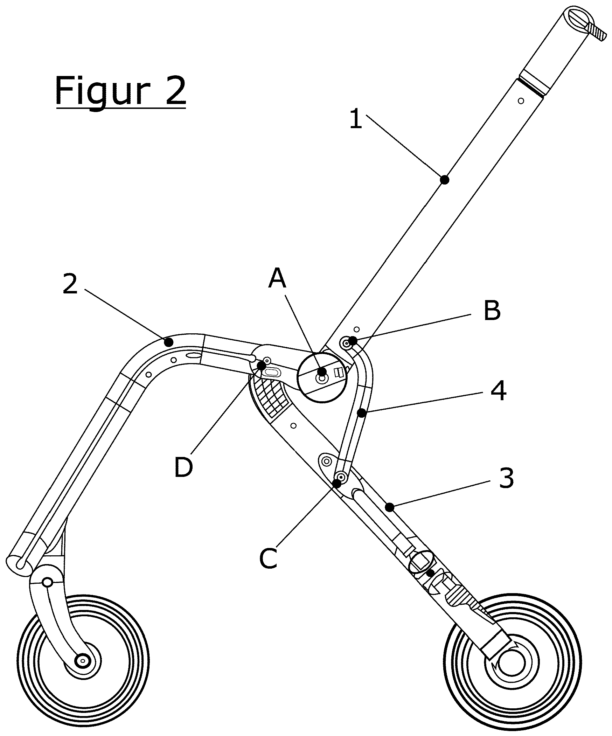

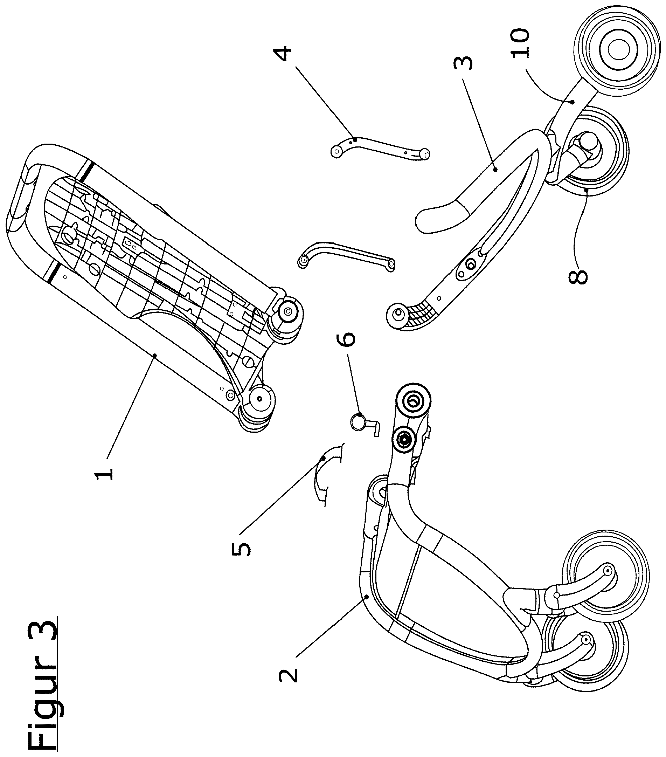

Nachfolgend wird zunächst auf die Figuren 1 bis 3 Bezug genommen und anhand dieser wird der grundsätzliche Aufbau eines erfindungsgemäßen Buggys beschrieben. Dieser umfasst einen Rückenrahmen 1, welcher im Prinzip aus einer etwa U-förmigen Strebe in Form eines nach unten hin offenen U besteht, wie man insbesondere in Figur 3 gut erkennen kann. In diese U-förmige Strebe 1 ist ein flächiges Rückenteil 9 eingelegt, welches zur Abstützung des Rückens dient und beispielsweise einen gitterartigen Aufbau aus Längs- und Querstreben oder Drähten hat, wobei es auf die genaue Ausführung dieses flächigen Rückenteils im Rahmen der vorliegenden Erfindung nicht ankommt. Am unteren Ende der U-förmigen Strebe des Rückenrahmens 1 befinden sich an beiden Seiten die Gelenke, um deren quer zu den Schenkeln der Strebe verlaufende Gelenkachse der Rückenrahmen beim Zusammenklappen des Buggys schwenkt. Diese Gelenkachse ist die erste Gelenkachse im Sinne der vorliegenden Erfindung, die in Figur 2 mit A bezeichnet ist.

Weiterhin umfasst der Buggy einen Sitzrahmen 2, welcher aus einer in sich gebogenen U-förmigen Strebe in Form eines nach oben hin offenen U besteht, wobei dieser Sitzrahmen 2 über die oben genannten Gelenke der ersten Gelenkachse A in den beiden oberen Endbereichen der U-Strebe schwenkbar mit dem Rückenrahmen 1 verbunden ist. Im unteren Bereich befinden sich beidseitig jeweils jenseits des Scheitelpunkts des U an der Strebe des Sitzrahmens 2 die beiden Vorderräder 7 des Buggys. Wie man in der Seitenansicht gemäß Figur 2 gut erkennen kann, verläuft die U-Strebe des Sitzrahmens 2, von der Seite her gesehen, von den Vorderrädern 7 ausgehend in einer stumpfwinklig abgewinkelten Form, die der Form eines Sitzes nachgebildet ist. Der Winkel der Abwinklung beträgt beispielsweise etwa 110 bis 120°. Der Verlauf der U-Strebe des Sitzrahmens 2 ist dabei bevorzugt so, dass der Scheitelpunkt der Abwinklung etwas höher liegt als das mit dem Rückenrahmen 1 verbundene Ende, an dem sich die erste Gelenkachse mit dem Rotationspunkt A befindet. Mit etwas Abstand vor diesem Rotationspunkt A ist der Sitzrahmen 2 um eine zweite Gelenkachse schwenkbar mit einem unteren Hinterrahmen 3 verbunden, dessen Form man insbesondere in der Explosionsdarstellung gemäß Figur 3 gut erkennen kann. In seinem oberen Bereich umfasst dieser Hinterrahmen 3 eine U-Strebe in Form eines nach oben hin offenen U. Diese ist wiederum unterseitig mit einer zweiten etwas kürzeren U-Strebe 10 verbunden, die die Form eines nach unten hin offenen U aufweist und an den beiden Enden dieser unteren Strebe sind die beiden Hinterräder 8 des Buggys angebracht.

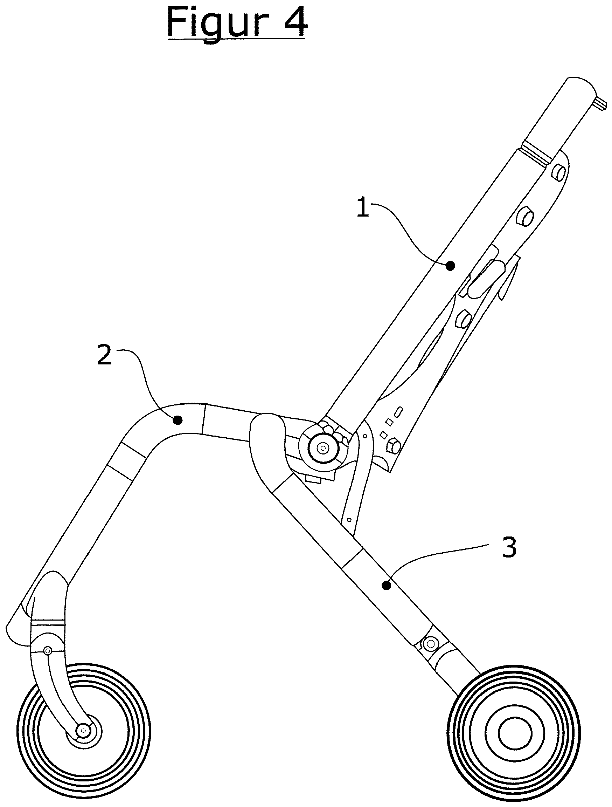

Wie man in den Figuren 1 und 3 erkennen kann, ist die Form der U-Strebe des Hinterrahmens 3 weiterhin so, dass sich in der Vorderansicht gesehen jeweils an den oberen Enden der Schenkel des U eine Umbiegung der Strebe nach innen hin ergibt. Demgemäß ist die gelenkige Verbindung der Strebe des Hinterrahmens 3 mit der Strebe des Sitzrahmens 2 derart, dass der Sitzrahmen 2 innerhalb des Hinterrahmens 3 liegt und von diesem eingefasst wird. Die zweite Schwenkachse, um die Sitzrahmen 2 und Hinterrahmen 3 gegenseitig beim Zusammenklappen des Buggys schwenken, entspricht dem in Figur 2 eingezeichneten Rotationspunkt D. In der Seitenansicht gemäß Figur 4 ist erkennbar, dass die beiden Streben des Hinterrahmens 3 an ihren oberen Enden jeweils etwas nach hinten in Richtung auf die erste Gelenkachse A hin umgebogen sind.

Somit besteht der Rahmen des erfindungsgemäßen Buggys im Wesentlichen aus drei größeren Rahmenteilen wie insbesondere in Figur 3 erkennbar, die gelenkig miteinander verbunden sind, nämlich dem Rückenrahmen 1, dem Sitzrahmen 2 und dem Hinterrahmen 3. Die Rahmenkonstruktion des Buggys umfasst weiterhin zwei Stützstreben 4, die wie sich aus Figur 2 ergibt an ihren oberen Enden jeweils gelenkig über eine dritte Gelenkachse im Rotationspunkt B mit dem Rückenrahmen 1 verbunden sind und die jeweils an ihrem unteren Ende über eine vierte Gelenkachse in dem Rotationspunkt C mit dem Hinterrahmen 3 verbunden sind. Damit ergibt sich ein Gelenkviereck mit der ersten Gelenkachse im Rotationspunkt A, der zweiten Gelenkachse im Rotationspunkt D, der dritten Gelenkachse im Rotationspunkt B und der vierten Gelenkachse im Rotationspunkt C. Diese vier Gelenkachsen bestimmen die Schwenkbewegung des Buggys beim Zusammenklappen. Wie man in Figur 2 erkennt, befindet sich die erste Gelenkachse im Rotationspunkt A in einer tieferen Position als die beiden benachbarten Gelenkachsen in den Rotationspunkten D und B und das aus den vier Gelenkachsen gebildete Gelenkviereck hat eine konkave Ecke, d.h. es handelt sich um ein konkaves Viereck.

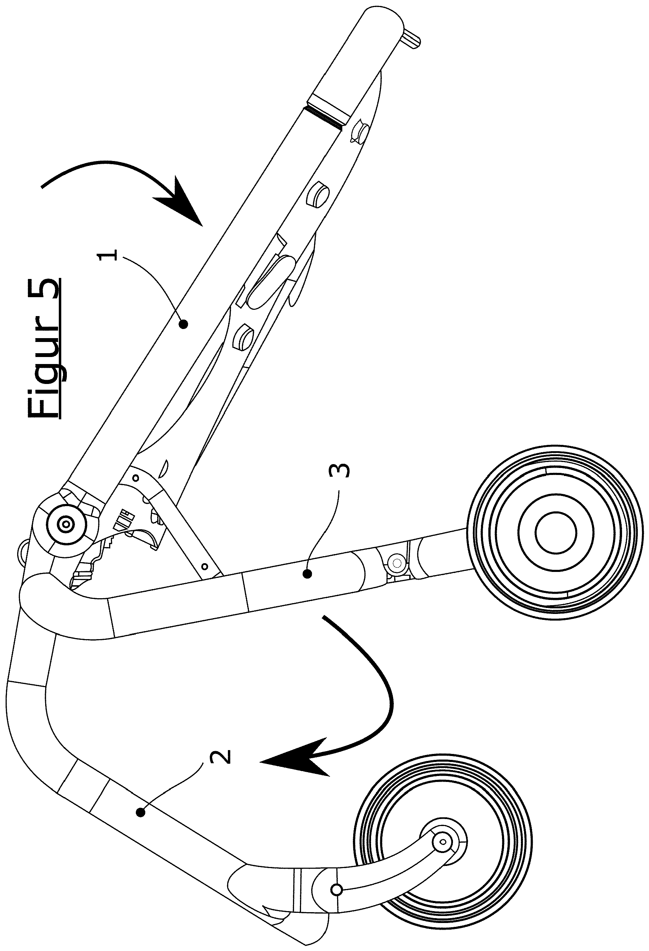

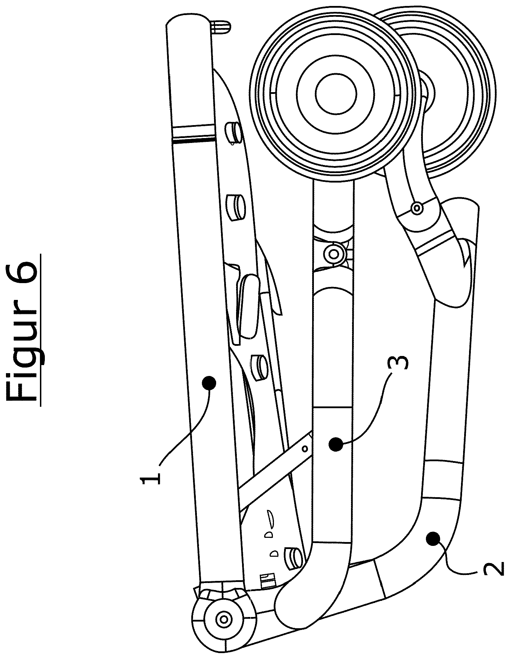

Nachfolgend wird der Bewegungsablauf bei der Schwenkbewegung während des Zusammenklappens des Buggys ausgehend von der in Figur 4 gezeigten Grundstellung (Fahrstellung) in die zusammengeklappte Transportstellung (siehe Figur 6) unter Bezugnahme auf die Figuren 4 bis 6 näher erläutert. Dabei wird auch auf Figur 2 Bezug genommen, in der die vier Rotationspunkte der Gelenkachsen angegeben sind. Figur 5 zeigt den Buggy in einem teilweise zusammengeklappten Zustand. Ausgehend von Figur 4 wird der Rückenrahmen 1 nach hinten hin geschwenkt in Richtung auf die Hinterräder des Buggys. Im Vergleich der Figuren 4 und 5 sieht man, dass sich die Distanz zwischen Rückenrahmen 1 und Hinterrahmen 3 verkürzt, während gleichzeitig der Winkel zwischen dem Rückenrahmen 1 und dem Sitzrahmen 2 sich beim Zusammenklappen vergrößert, wobei der Rückenrahmen 1 in der Zeichnung im Uhrzeigersinn in Richtung des in Figur 5 eingezeichneten Pfeils schwenkt.

Der Rückenrahmen 1 schwenkt um den Rotationspunkt A der ersten Gelenkachse gegenüber dem Sitzrahmen 2. Die Stützstreben 4, die einerseits am Rückenrahmen 1 und andererseits am Hinterrahmen 3 angelenkt sind, zwingen den Hinterrahmen 3 dazu, ebenfalls im Uhrzeigersinn zu schwenken, wodurch sich dessen Winkeldistanz zum Sitzrahmen 2 verkürzt, wie man durch den ebenfalls in Figur 5 eingezeichneten Pfeil erkennt. Der Hinterrahmen 3 schwenkt somit gegenüber dem Sitzrahmen 2 um die zweite Gelenkachse des Rotationspunkts D. Das obere Ende der Stützstreben 4 schwenkt um die dritte Gelenkachse im Rotationspunkt B gegenüber dem Rückenrahmen 1 und das untere Ende der Stützsteben 4 schwenkt um die vierte Gelenkachse im Rotationspunkt C gegenüber dem Hinterrahmen 3. Figur 5 zeigt eine teilweise zusammengeklappte Mittelstellung, während Figur 6 die endgültige vollständig zusammengeklappte Transportstellung zeigt. Wie man sieht, liegen nun die Strebe des Rückerahmens 1, die Strebe des Hinterrahmens 3 und auch die Strebe des Sitzrahmens 2 vergleichsweise nahe beieinander und in einer nahezu parallelen Stellung, so dass sich eine kompakte Transportstellung ergibt.

Der Mechanismus zum Entarretieren der Gelenke, um das Zusammenklappen des Buggys zu ermöglichen, wird nachfolgend unter Bezugnahme auf die Figur 1 näher erläutert. Man erkennt dort einen mit 6 bezeichneten ersten Zughebel, bei dessen herausziehen man einen Mechanismus in den Gelenken in Rotationspunkt A, der diese in der Grundstellung blockiert, lösen kann. Dieser Mechanismus kann beispielsweise ineinander greifende Bauteile wie Zähne von Zahnrädern oder dergleichen umfassen und wird hier nicht näher erläutert. Nachdem dieser erste Zughebel 6 gezogen wurde, kann man nun durch Anheben eines in dem Beispiel breiteren laschenartigen zweiten Zughebels 5 die Gelenke Lösen, so dass der Buggy in die Transportstellung zusammengeklappt werden kann. Der erste Zughebel 6 dient somit quasi als Sicherung und nur wenn dieser gelöst wurde, ist der zweite Zughebel 5 überhaupt wirksam. Damit wird verhindert, dass man durch versehentliches Anheben des zweiten Zughebels 5 ungewollt die Gelenke löst und die Bewegung des Zusammenklappens auslöst. Der zweite Zughebel 5, der laschenartig ausgebildet ist und den man somit mit der Hand untergreifen kann, greift an seinen beiden Enden an zwei Punkten an, die dann beispielsweise über hier nicht näher erläuterte Zugmittel die Gelenke, die Rückenrahmen 1 und Sitzrahmen 2 miteinander verbinden, lösen. Dieser zweite Zughebel hat den weiteren Vorteil, dass man durch dessen anheben zum einen die Gelenke lösen und gleichzeitig auch den Buggy anheben kann, so dass das Zusammenklappen durch das Eigengewicht des Buggys unterstützt werden kann. Dabei kann man zum Beispiel mit der einen Hand diesen zweiten Zughebel 5 anheben (siehe auch den Pfeil in Figur 1) und mit der anderen Hand durch Angreifen an dem Rückenrahmen 1 beispielsweise im oberen Bereich kann man die Bewegung des Zusammenklappens unterstützen, bis die in Figur 6 dargestellte Transportstellung erreicht ist.

### Bezugszeichenliste

1 Rückenrahmen
2 Sitzrahmen
3 Hinterrahmen
4 Stützstreben
5 zweiter Zughebel
6 erster Zughebel
7 Vorderräder
8 Hinterräder
9 Rückenteil
10 untere U-Strebe
A Rotationspunkt, erste Gelenkachse
D Rotationspunkt, zweite Gelenkachse
B Rotationspunkt, dritte Gelenkachse
C Rotationspunkt, vierte Gelenkachse

## Patentansprüche

1. Zusammenklappbarer Kinderwagen vom Typ Buggy mit einem Rahmengestell umfassend einen Rückenrahmen (1), einen mit diesem gelenkig verbundenen unteren vorderen Sitzrahmen (2), wobei beim Zusammenklappen des Buggys der Rückenrahmen (1) gegenüber dem unteren vorderen Sitzrahmen um eine erste gemeinsame Gelenkachse (A) schwenkt, weiter umfassend einen mit dem unteren vorderen Sitzrahmen (2) gelenkig verbundenen unteren Hinterrahmen (3), wobei beim Zusammenklappen des Buggys der untere Hinterrahmen (3) gegenüber dem unteren vorderen Sitzrahmen (2) um eine zweite gemeinsame Gelenkachse (D) schwenkt, weiter umfassend mindestens eine Stützstrebe (4), die einerseits in einem ersten Bereich beim Zusammenklappen des Buggys um eine dritte Gelenkachse (B) schwenkend mit dem Rückenrahmen (1) gelenkig verbunden ist, wobei die Stützstrebe (4) andererseits in einem zweiten Bereich, mit Abstand von dem ersten Bereich, um eine vierte Gelenkachse (C) schwenkend mit dem unteren Hinterrahmen (3) gelenkig verbunden ist, wobei der Sitzrahmen (2) eine von der ersten Gelenkachse (A) ausgehende durchgehende in der Vorderansicht des Buggys gesehen etwa U-förmige nach oben hin offene U-Strebe umfasst, **wobei** an der U-Strebe des Sitzrahmens (2) Vorderräder angebracht sind und wobei die U-Strebe des Sitzrahmens (2) in der Seitenansicht des Buggys gesehen einen von der ersten Gelenkachse (A) ausgehend zu den Vorderrädern (7) hin nach unten hin abgewinkelten Verlauf aufweist, **dadurch gekennzeichnet, dass** die zweite Gelenkachse (D) in der Grundstellung des Buggys in der Seitenansicht des Buggys gesehen oberhalb der ersten Gelenkachse (A) oder etwa auf gleicher Höhe mit dieser liegt.

2. Zusammenklappbarer Kinderwagen nach Anspruch 1, **dadurch gekennzeichnet, dass** die U-Strebe des Sitzrahmens (2) einen stumpfwinklig bis etwa rechtwinklig abgewinkelten Verlauf aufweist.

3. Zusammenklappbarer Kinderwagen nach Anspruch 1 oder 2, **dadurch gekennzeichnet, dass** die beiden Vorderräder (7) beiderseits des unteren Scheitelpunkts an der U-Strebe des Sitzrahmens (2) angebracht sind.

4. Zusammenklappbarer Kinderwagen nach Anspruch 2 oder nach den Ansprüchen 2 und 3, **dadurch gekennzeichnet, dass** die U-Strebe des Sitzrahmens (2) einen in der Grundstellung des Buggys in der Seitenansicht gesehen von der ersten Gelenkachse (A) ausgehend einen ersten etwa horizontalen oder leicht ansteigenden Abschnitt aufweist, welcher sich bis zu der stumpfwinkligen oder etwa rechtwinkligen Abwinklung hin erstreckt, auf den dann, zu den Vorderrädern (7) hin, ein nach unten hin geneigter zweiter Abschnitt folgt.

5. Zusammenklappbarer Kinderwagen nach Anspruch 4, **dadurch gekennzeichnet, dass** die zweite Gelenkachse (D) in dem ersten Abschnitt der U-Strebe des Sitzrahmens (2) angeordnet ist.

6. Zusammenklappbarer Kinderwagen nach einem der Ansprüche 1 bis 5, **dadurch gekennzeichnet, dass** der untere Hinterrahmen (3) wenigstens zwei miteinander verbundene U-Streben umfasst, nämlich eine untere U-Strebe (10) in Form eines nach unten hin offenen U, an der sich die Hinterräder (8) befinden und eine obere etwa U-förmige Strebe in Form eines nach oben hin offenen U, wobei in der Vorderansicht gesehen untere und obere U-Strebe etwa im Bereich ihrer jeweiligen Scheitelpunkte miteinander verbunden sind.

7. Zusammenklappbarer Kinderwagen nach einem der Ansprüche 1 bis 6, **dadurch gekennzeichnet, dass** der untere Hinterrahmen (3) wenigstens eine U-Strebe etwa in Form eines nach oben hin offenen U aufweist, deren beide obere Endbereiche jeweils außenseitig an dem Sitzrahmen (2) angelenkt sind.

8. Zusammenklappbarer Kinderwagen nach Anspruch 7, **dadurch gekennzeichnet, dass** die U-Strebe des unteren Hinterrahmens (3) mit ihren beiden oberen Endbereichen in dem ersten Abschnitt der U-Strebe des Sitzrahmens (2) an dieser gelenkig angebracht ist.

9. Zusammenklappbarer Kinderwagen nach einem der Ansprüche 7 oder 8, **dadurch gekennzeichnet, dass** die beiden oberen Endbereiche der U-Strebe des Hinterrahmens (3) in der Vorderansicht gesehen jeweils etwas nach innen und aufeinander zu umgebogen oder abgewinkelt sind.

10. Zusammenklappbarer Kinderwagen nach einem der Ansprüche 7 bis 9, **dadurch gekennzeichnet, dass** die beiden oberen Endbereiche der U-Strebe des Hinterrahmens (3) in der Seitenansicht gesehen jeweils etwas nach hinten hin in Richtung Rückenrahmen (1) umgebogen oder abgewinkelt sind.

11. Zusammenklappbarer Kinderwagen nach einem der Ansprüche 1 bis 10, **dadurch gekennzeichnet, dass** sich die Vorderräder (7) an dem unteren vorderen Sitzrahmen (2) befinden und sich die Hinterräder (8) an dem unteren Hinterrahmen (3) befinden.

12. Zusammenklappbarer Kinderwagennach einem der Ansprüche 1 bis 11, **dadurch gekennzeichnet, dass** der Mechanismus für die Entarretierung der Gelenke mindestens einen Zughebel (5, 6) oder Zuggriff umfasst, welcher im Bereich des Sitzrahmens angeordnet ist.

13. Zusammenklappbarer Kinderwagen nach Anspruch 12, **dadurch gekennzeichnet, dass** der Mechanismus für die Entarretierung der Gelenke einen ersten Zughebel (6) oder Zuggriff umfasst, nach dessen herausziehen durch ausüben einer Zugkraft auf einen zweiten Zughebel (5) oder Zuggriff der Buggy zusammenklappbar ist.

14. Zusammenklappbarer Kinderwagen nach Anspruch 13, **dadurch gekennzeichnet, dass** durch herausziehen des zweiten Zughebels (5) und/oder des ersten Zughebels (6) oder Zuggriffs Eingriffs- und Arretierelemente, die die Gelenke arretieren, welche den Rückenrahmen (1) um die erste Gelenkachse (A) schwenkbar mit dem Sitzrahmen (2) verbinden, gelöst werden.

## Claims

1. A foldable pushchair of the buggy type, having a frame structure comprising a back frame (1), a lower front seat frame (2) hinged thereto, the back frame (1) pivoting about a first common joint axis (A) relative to the lower front seat frame when the buggy is folded up, further comprising a lower rear frame (3) which is hinged to the lower front seat frame (2), the lower rear frame (3) pivoting about a second common joint axis (D) relative to the lower front seat frame (2) when the buggy is folded up, further comprising at least one supporting strut (4), which is hinged on one side in a first region to the back frame (1) so as to pivot about a third joint axis (B) when the buggy is folded up, the supporting strut (4) being hinged on the other side in a second region spaced from the first region to the lower rear frame (3) so as to pivot about a fourth joint axis (C), the seat frame (2) comprising a continuous U-strut, which starts from the first joint axis (A), is approximately U-shaped as seen in the front view of the buggy and is open at the top, front wheels being attached to the U-strut of the seat frame (2), and the U-strut of the seat frame (2) having a profile which is angled downwards starting from the first joint axis (A) towards the front wheels (7) as seen in the side view of the buggy,
**characterised in that**
in the basic position of the buggy, the second joint axis (D) is above the first joint axis (A) or approximately at the same height as same, as seen in the side view of the buggy.

2. The foldable pushchair according to Claim 1, **characterised in that**
the U-strut of the seat frame (2) has a profile angled at an obtuse angle to approximately at a right angle.

3. The foldable pushchair according to Claim 1 or 2, **characterised in that**
the two front wheels (7) are attached to the U-strut of the seat frame (2) on both sides of the lower apex.

4. The foldable pushchair according to Claim 2 or according to Claims 2 and 3,
**characterised in that**
in the basic position of the buggy, the U-strut of the seat frame (2) has a first approximately horizontal or slightly rising section starting from the first joint axis (A) as seen in the side view, which section extends as far as the portion angled at an obtuse angle or approximately at a right angle, which is then followed, towards the front wheels (7), by a second section inclined downwards.

5. The foldable pushchair according to Claim 4, **characterised in that**
the second joint axis (D) is situated in the first section of the U-strut of the seat frame (2).

6. The foldable pushchair according to any one of Claims 1 to 5,
**characterised in that**
the lower rear frame (3) comprises at least two interconnected U-struts, specifically a lower U-strut (10) in the form of a downwardly open U, on which the rear wheels (8) are situated, and an upper approximately U-shaped strut in the form of an upwardly open U, wherein, as seen in the front view, the lower and upper U-struts are connected to each other approximately in the region of their respective apices.

7. The foldable pushchair according to any one of Claims 1 to 6,
**characterised in that**
the lower rear frame (3) has at least one U-strut approximately in the form of an upwardly open U, the two upper end regions of which are each hinged to the seat frame (2) on the outside.

8. The foldable pushchair according to Claim 7, **characterised in that**
the U-strut of the lower rear frame (3) is hinged by its two upper end regions to the U-strut of the seat frame (2) in the first section of same.

9. The foldable pushchair according to either of Claims 7 or 8,
**characterised in that**
the two upper end regions of the U-strut of the rear frame (3) are each bent over or angled somewhat inwards and towards each other as seen in the front view.

10. The foldable pushchair according to any one of Claims 7 to 9,
**characterised in that**
the two upper end regions of the U-strut of the rear frame (3) are each bent over or angled somewhat backwards towards the back frame (1) as seen in the side view.

11. The foldable pushchair according to any one of Claims 1 to 10,
**characterised in that**
the front wheels (7) are situated on the lower front seat frame (2), and the rear wheels (8) are situated on the lower rear frame (3).

12. The foldable pushchair according to any one of Claims 1 to 11,
**characterised in that**
the mechanism for unlocking the joints comprises at least one pull lever (5, 6) or pull handle, which is arranged in the region of the seat frame.

13. The foldable pushchair according to Claim 12, **characterised in that**
the mechanism for unlocking the joints comprises a first pull lever (6) or pull handle, after the pulling out of which the buggy can be folded up by exerting a pulling force on a second pull lever (5) or pull handle.

14. The foldable pushchair according to Claim 13, **characterised in that**
by pulling out the second pull lever (5) and/or the first pull lever (6) or pull handle, engaging and arresting elements arresting the joints which connect the back frame (1) to the seat frame (2) pivotably about the first joint axis (A) are released.

## Revendications

1. Poussette pliable de type buggy, pourvue d'un cadre d'armature comprenant un cadre de dossier (1), un cadre d'assise (2) relié de manière articulée avec celui-ci, lorsque l'on plie le Buggy, le cadre de dossier (1) pivotant par rapport au cadre d'assise inférieur avant, autour d'un premier axe d'articulation (A) commun, comprenant par ailleurs un cadre arrière (3), relié de manière articulée avec le cadre d'assise (2) inférieur avant, lorsque l'on plie le buggy, le cadre arrière (3) inférieur pivotant par rapport au cadre d'assise (2) inférieur avant autour d'un deuxième axe d'articulation (D) commun, comprenant par ailleurs au moins un montant de support (4), qui d'une part, lorsque l'on plie le buggy, en pivotant autour d'un troisième axe d'articulation (B) est relié de manière articulée dans une première zone avec le cadre de dossier (1), d'autre part, en pivotant autour d'un quatrième axe d'articulation (C), le montant de support (4) étant relié de manière articulée dans une deuxième zone, avec un écart par rapport à la première zone avec le cadre arrière (3) inférieur, le cadre d'assise (2) comportant un montant en forme de U continu, partant du premier axe d'articulation (A), approximativement en forme de U, considéré en vue avant du Buggy, ouvert sur le dessus, sur le montant en forme de U du cadre d'assise (2) étant montées des roues avant et, en vue latérale du buggy, le montant en forme de U du cadre d'assise (2) présentant un trajet coudé vers le bas vers les roues avant (7), en partant du premier axe d'articulation (A), **caractérisée en ce que** dans la position de base du buggy, considéré en vue latérale du buggy, le deuxième axe d'articulation (D) se situe au-dessus de l'axe d'articulation (A) ou approximativement au même niveau que celui-ci.

2. Poussette pliable selon la revendication 1, **caractérisée en ce que** le montant en forme de U du cadre d'assise (2) présente un trajet coudé à angle obtus jusqu'à approximativement à angle droit.

3. Poussette pliable selon la revendication 1 ou 2, **caractérisée en ce que** les deux roues avant (7) sont montées de part et d'autre de la crête inférieure sur le montant en forme de U du cadre d'assise (2).

4. Poussette pliable selon la revendication 2 ou selon les revendications 2 et 3, **caractérisée en ce que**, considéré en vue latérale dans la position de base du buggy, le montant en forme de U du cadre d'assise (2) comporte un premier segment approximativement horizontal ou légèrement croissant, partant du premier axe d'articulation (A), qui s'étend jusqu'au coude à angle obtus ou à angle approximativement droit, auquel fait alors suite un deuxième segment incliné vers le bas, en direction des roues avant (7).

5. Poussette pliable selon la revendication 4, **caractérisée en ce que** le deuxième axe d'articulation (D) est placé dans le premier segment du montant en forme de U du cadre d'assise (2).

6. Poussette pliable selon l'une quelconque des revendications 1 à 5, **caractérisée en ce que** le cadre arrière (3) inférieur comprend au moins deux montants en forme de U, reliés l'un à l'autre, à savoir un montant en forme de U (10) inférieur sous la forme d'un U ouvert vers le bas, sur lequel se trouvent les roues arrière (8) et un montant supérieur, approximativement en forme de U, sous la forme d'un U ouvert vers le haut U, considérés en vue avant, les montants en forme de U inférieur et supérieur étant reliés l'un à l'autre approximativement dans la zone de leurs crêtes respectives.

7. Poussette pliable selon l'une quelconque des revendications 1 à 6, **caractérisée en ce que** le cadre arrière (3) inférieur comporte au moins un montant en forme de U, approximativement sous la forme d'un U ouvert vers le haut, dont les deux zones d'extrémité supérieures sont articulées chacun par leur face extérieure sur le cadre d'assise (2).

8. Poussette pliable selon la revendication 7, **caractérisée en ce que** par ses deux zones d'extrémité supérieures, le montant en forme de U du cadre arrière (3) inférieur est monté de manière articulée sur le montant en forme de U du cadre d'assise (2), dans le premier segment de celui-ci.

9. Poussette pliable selon l'une quelconque des revendications 7 ou 8, **caractérisée en ce que**, considérées en vue avant, les deux zones d'extrémité supérieures du montant en forme de U du cadre arrière (3) sont recourbées ou coudées chacune, quelque peu vers l'intérieur et l'une vers l'autre.

10. Poussette pliable selon l'une quelconque des revendications 7 à 9, **caractérisée en ce que**, considérées en vue latérale, les deux zones d'extrémité supérieures du montant en forme de U du cadre arrière (3) sont recourbées ou coudées chacune, quelque peu vers l'arrière en direction du cadre de dossier (1).

11. Poussette pliable selon l'une quelconque des revendications 1 à 10, **caractérisée en ce que** les roues avant (7) se trouvent sur le cadre d'assise (2) inférieur avant et **en ce que** les roues arrière (8) se trouvent sur le cadre arrière (3) inférieur.

12. Poussette pliable selon l'une quelconque des revendications 1 à 11, **caractérisée en ce que** le mécanisme de déblocage des articulations comprend au moins un levier de traction (5, 6) ou une poignée de traction, qui est placé(e) dans la zone du cadre d'assise.

13. Poussette pliable selon la revendication 12, **caractérisée en ce que** le mécanisme de déblocage des articulations comprend un premier levier de traction (6) ou une première poignée de traction, après le retrait vers l'extérieur duquel ou de laquelle, par l'exercice d'une force de pression sur un deuxième levier de traction (5) ou ou une deuxième poignée de traction, le buggy peut se plier.

14. Poussette pliable selon la revendication 13, **caractérisée en ce que** lorsque l'on tire vers l'extérieur le deuxième levier de traction (5) et/ou le premier levier de traction (6) ou la première poignée de traction, des éléments d'engagement et des éléments de blocage qui bloquent les articulations, lesquelles relient le cadre de dossier (1) de manière pivotante autour de l'axe d'articulation (A) avec le cadre d'assise (2) sont désolidarisés.
